(19) Europäisches Patentamt
European Patent Office
Office européen des brevets

(11) Veröffentlichungsnummer: **0 213 568 B1**

# (12) EUROPÄISCHE PATENTSCHRIFT

(45) Veröffentlichungstag der Patentschrift: **19.09.90**

(51) Int. Cl.⁵: **G03G 9/12,** C08F 297/02

(21) Anmeldenummer: **86111621.8**

(22) Anmeldetag: **22.08.86**

## (54) Elektrostatographischer Suspensionsentwickler.

(30) Priorität: **03.09.85 DE 3531381**

(43) Veröffentlichungstag der Anmeldung:
**11.03.87 Patentblatt 87/11**

(45) Bekanntmachung des Hinweises auf die Patenterteilung:
**19.09.90 Patentblatt 90/38**

(84) Benannte Vertragsstaaten:
**BE DE FR GB**

(56) Entgegenhaltungen:
**EP-A- 0 157 269**
**DE-A- 1 927 592**
**DE-A- 2 452 499**
**FR-A- 2 251 583**
**GB-A- 828 814**
**GB-A- 1 156 300**
**US-A- 2 543 844**
**US-A- 4 476 210**

**RESEARCH DISCLOSURE, Nr. 143, März 1976, Seite 24, Hampshire, GB; S.H. MERRIL et al.: "Liquid electrographic developers", Zusammenfassung Nr. 14337**

(73) Patentinhaber: **Agfa-Gevaert AG, D-5090 Leverkusen 1(DE)**

(72) Erfinder: **Podszun, Wolfgang, Dr., Wolfskaul 4, D-5000 Köln 80(DE)**
Erfinder: **Witte, Josef, Dr., Haferkamp 10, D-5000 Köln(DE)**
Erfinder: **Süling, Carlhans, Dr., Carl-Leverkus-Strasse 10, D-5068 Odenthal(DE)**
Erfinder: **Goossens, John, Ir., Hebbelstrasse 5, D-5090 Leverkusen 1(DE)**

**EP 0 213 568 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen verbesserten elektrostatographischen Suspensionsentwickler, der ein Blockcopolymerisat enthält.

Zum Entwickeln von elektrostatographischen Bildern auf elektrostatographischen Aufzeichnungsmaterialien sind Trocken- und Naßentwicklungsverfahren bekannt. Dabei sind die Naßentwicklungsverfahren unter Verwendung von Suspensionsentwicklern den Trockenentwicklungsverfahren hinsichtlich Randschärfe und Auflösungsvermögen überlegen.

Suspensionsentwickler bestehen im allgemeinen aus einer hochisolierenden Trägerflüssigkeit, einem Pigment, einer ladungsbestimmenden Substanz (auch Steuerstoff genannt) und einem Polymer. Die Trägerflüssigkeit besitzt vorzugsweise einen Volumenwiderstand von mindestens $10^9$ Ohm.cm und eine Dielektrizitätskonstante unter 3.

Als Pigmente werden z.B. übliche Azofarbstoffe Xanthenfarbstoffe, Phthalocyaninfarbstoffe, wie sie u.a. in der DE-OS 2 944 021 beschrieben werden, aber auch Triphenylmethanfarbstoffe, Acridinfarbstoffe oder Chinolinfarbstoffe verwendet. Als Schwarzpigmente werden vorzugsweise Rußpigmente verwendet.

Das Polymer hat in erster Linie die Aufgabe, der Pigmentdispersion eine ausreichende sterische Stabilisierung zu verleihen und eine Haftung bzw. Fixierung der Pigmentteilchen am Bildträger zu gewährleisten.

Zahlreiche unterschiedlich aufgebaute Polymere können als Komponente von elektrostatographischen Suspensionsentwicklern verwendet werden. So ist die Verwendung von statistischen Copolymerisaten, die aus weniger polaren Monomeren ($C_6$-$C_{20}$-Alkyl(meth)-acrylat) und stärker polaren Monomeren (z.B. Aminomethacrylate, Vinylpyrrolidon) aufgebaut sind, vielfach beschrieben worden (DE-OS 19 27 592, DE-OS 19 38 001, BE-PS 784 367, JP-N 49 129 539, JP-N 73 431 54). Die Anwendung von Styrol-Butadien-Copolymerisaten ist ebenso möglich (DE-OS 23 37 419, DE-OS 24 52 499, JP-N 73 290 72).

Auch verschiedenartige Pfropfcopolymerisate sind zum Aufbau von Suspensionsentwicklern verwendet worden (DE-OS 20 42 804, DE-OS 21 03 045, DE-OS 24 21 037, DE-OS 25 32 281, DE-OS 24 32 288, DE-OS 29 35 287, GB-PS 2 157 2343, GB-PS 2 029 049, US-PS 40 33 890). Aus der DE-OS 32 32 062 ist bekannt, die Pigmentteilchen eines Suspensionsentwicklers durch den Aufbau einer vernetzten Polymerhülle mittels Fällungspolymerisation sterisch zu stabilisieren.

Die Verwendung von Blockpolymeren zur sterischen Stabilisierung von Dispersionen wird in der GB-PS 1 186 562 sowie in Advances in Colloid and Interface Science, 4, 193-277 (1974) beschrieben. Geeignet sind in erster Linie A-B-Blockpolymere, bei denen der Polymeranteil A im Dispersionsmedium unlöslich ist und eine starke Affinität zur Teilchenoberfläche hat und der Polymeranteil B im Dispersionsmedium gut löslich ist und keine oder nur geringe Affinität zur Teilchenoberfläche hat.

Verwendet man Blockpolymere des Typs A-B, in den A ein Polystyrolblock und B ein Polybutadienblock ist, so erhält man zwar stabile Dispersionen, die Teilchengrößen sind jedoch unvorteilhaft groß.

Sofern die Polymeren ionische Gruppen enthalten, können diese eine Rolle beim Aufbau der Tonerladung spielen. Im allgemeinen wird die Ladung der Tonerteilchen jedoch durch öllösliche ionogene Verbindungen z.B. durch Metallsalze von organischen Säuren mit langen aliphatischen Resten erzeugt. So können beispielsweise Rußpigmente in flüssigem Isoparafin durch organische Phosphorverbindungen (GB-PS 1 151 141) positiv geladen werden. Ein negativer Ladungsaufbau ist durch Zusatz von basischen Metallalkylsulfonaten möglich (GB-PS 1 571 401).

Der Erfindung liegt die Aufgabe zugrunde, einen elektrostatographischen Suspensionsentwickler mit hoher Dispersionsstabilität bereitzustellen, der eine kleine Korngröße, und einheitliche Kornverteilung aufweist und frei von Agglomeraten ist.

Eine weitere Aufgabe der Erfindung ist die Bereitstellung eines elektrostatographischen Suspensionsentwicklers mit positiver Tonerladung und hoher Ladungsstabilität.

Es wurde nun ein elektrostatographischer Suspensionsentwickler gefunden, der in einer elektrisch isolierenden Trägerflüssigkeit mit einem Volumenwiderstand von mindestens $10^9$ Ohm.cm und einer Dielektrizitätskonstanten unter 3 ein dispergiertes Pigment und ein Blockcopolymerisat enthält, welches durch

a) einen Block aus 5–100 Gew.-Teilen polymerisierten, basischen, stickstoffhaltigen Vinylaromaten und 0–95 Gew.-Teilen polymerisierten, stickstofffreien Vinylaromaten und

b) einen Block aus polymerisierten $C_4$–$C_6$-Dienen, mit 25–95% seitenständigen Doppelbindungen, die ganz oder teilweise mit Alkylmercaptanen umgesetzt sind, gekennzeichnet ist.

Geeignete basische, stickstoffhaltige Vinylaromaten sind basisch substituierte Vinylaromaten, wie z.B. p-Dimethylaminomethylstyrol und stickstoffhaltige Vinylheteroaromaten. Bevorzugt werden Vinylsubstituierte Pyridine, wie z.B. 2-Vinylpyridin, 3-Vinylpyridin, 4-Vinylpyridin und 2-Methyl-5-Vinylpyridin.

Besonders bevorzugt werden 2-Vinylpyridin und 4-Vinylpyridin. Der Anteil an stickstoffhaltigen

Vinylmonomeren beträgt 5-100 Gew.-%, vorzugsweise 25-100 Gew.-%, insbesondere 50-100 Gew.-% bezogen auf die Summe von stickstoffhaltigen und stickstoffreien Vinylaromaten.

Geeignete stickstoffreie Vinylaromaten sind Styrol und substituierte Styrole, wie z.B. α-Methylstyrol, 4-Methylstyrol and 3-Methylstyrol und Derivate des Naphthalins, wie Vinylnaphthalin oder Isoprenylnaphthalin. Besonders bevorzugt wird Styrol.

Als $C_4$-$C_6$-Diene eignen sich Butadien, Isopren, Dimethylbutadien, Ethylbutadien, wobei Butadien bevorzugt wird.

In einer ganz besonders bevorzugten Ausführungsform enthält das Blockcopolymerisat

a) einen Block aus 5-100 Gew.-Teilen polymerisiertem Vinylpyridin und 0-95 Gew.-Teilen polymerisiertem Styrol und

b) einen Polybutadienblock, dessen Vinyldoppelbindungen ganz oder teilweise mit Alkylmercaptanen umgesetzt sind.

Zur Herstellung der erfindungsgemäß verwendeten mit Alkylmercaptanen modifizierten Blockcopolymerisate eignen sich Dien-Vinylaromaten-Blockpolymere, insbesondere Butadien-Vinylaromaten-Blockpolymere, die einen Masseanteil an Dien, insbesondere Butadien von 20 bis 80%, vorzugsweise von 40 bis 80 % und insbesondere 50 bis 75 % enthalten. Der polymerisierte Dien-Block, insbesondere Polybutadienblock enthält dabei 25 bis 95 % Vinyldoppelbindungen, bezogen auf die Gesamtzahl der olefinischen Doppelbindungen. Bevorzugt werden Vinyldoppelbindungsanteile von 40 bis 80 %. Die Molmassen der der Umsetzung mit Alkylmercaptanen zugrundeliegenden Blockpolymeren sollen im Bereich von $10^3$ g/mol bis $5.10^5$ g/mol liegen, wobei Molmassen von $1.10^4$ bis $1.10^5$ bevorzugt werden. Die Herstellung solcher Blockpolymerisate erfolgt vorzugsweise durch anionische Polymerisation mit Hilfe von Alkyllithium-Verbindungen und wird unten beispielhaft beschrieben. Zur Regulierung des Anteils an Vinyldoppelbindungen können die üblichen Donatoren wie Ether oder tertiäre Amine, z.B. Tetrahydrofuran, Glykoldimethylehter, Tetramethylethylendiamin verwendet werden.

Gegebenenfalls können neben polymerisierten Dienen und polymerisierten Vinylaromaten im Ausgangs-Blockcopolymerisat auch noch andere polymerisierte Einheiten, vorzugsweise bis maximal 20 % Masseanteil vorliegen. Derartige zusätzliche Einheiten können z.B. durch Polymerisation von folgenden Verbindungen erhalten werden: Acrylnitril, Methacrylnitril, Acrylsäureester und Methacrylsäureester wie z.B. tert.-Butylmethacrylat.

Die Umsetzung mit Alkylmercaptanen wird bevorzugt in Kohlenwasserstofflösungen in Gegenwart von Radikalbildnern durchgeführt. Geeignete Mercaptane sind solche, die lineare oder verzweigte Alkylgruppen mit 4 bis 20 Kohlenstoffatomen besitzen, z.B. n-Butylmercaptan, 2-Ethylhexylmercaptan oder n-Dodecylmercaptan. Bevorzugt werden Mercaptane mit 8 bis 20 Kohlenstoffatomen in der Alkylgruppe verwendet.

Als Radikalbildner können Peroxide z.B. Dicyclohexylpercarbonat, tert. Butyl-perpivalat, Dilauroylperoxid oder Azoverbindungen wie Azodiisobutyronitril verwendet werden.

Als Lösungsmittel werden Kohlenwasserstoffe wie Butan, Hexan, Heptan oder Isooctan, vorzugsweise aber aromatische oder cycloaliphatische Kohlenwasserstoffe wie Toluol, Cyclohexan oder Methylcyclopentan oder Gemische daraus verwendet.

Die bei dieser Reaktion eingesetzte Menge an Alkylmercaptan wird so bemessen, daß bevorzugt 5 bis 100% der Vinyldoppelbindungen des Polybutadienblocks umgesetzt werden. Insbesondere werden 10 bis 75% der Vinyldoppelbindungen umgesetzt.

Als Trägerflüssigkeit mit einem Volumenwiderstand von mindestens $10^9$ Ohm.cm und einer Dielektrizitätskonstanten unter 3 können Kohlenwasserstoffe, Fluorkohlenwasserstoffe oder Silikonöle eingesetzt werden, bevorzugt werden Flüssigkeiten auf Kohlenwasserstoffbasis beispielsweise aromatische Kohlenwasserstoffe wie Benzol, Toluol oder Xylole oder aliphatische $C_6$-$C_{15}$-Kohlenwasserstoffe, wie n-Hexan, Cyclohexan, n-Heptan, n-Octan oder Dekalin. Auch Mischungen unterschiedlicher Kohlenwasserstoffe können verwendet werden. Besonders geeignet sind verzweigte aliphatische Kohlenwasserstoffe wie Isodecan und Isododecan.

Als Pigmente eignen sich die oben erwähnten üblicherweise für Suspensionsentwickler eingesetzten Schwarz- und Farbpigmente. Gut geeignet sind beispielsweise Spiritschwarz (C.I. Nr. 50415). Anilinschwarz (C.I. Nr. 50440), Cyaninblau (C.I. Nr. 74250), Brillant Carmine 6 B (C.I. 15850), Echtrot (C.I. Nr. 15865), Benzidinorange (C.I. 21110) oder Permanentgelb 52 (C.I. 21100). Besonders bevorzugt sind Ruß (vor allem basische Rußtypen), Helioechtblau HG (C.I. Nr. 74160), Fanalrosa B (C.I. Nr. 45160) und Helioechtgelb GRN (C.I. Nr. 21100).

Die Pigmente können im allgemeinen ohne besondere Vorbehandlung zur Herstellung des erfindungsgemäßen Suspensionsentwicklers eingesetzt werden. In speziellen Fällen, beispielsweise wenn eine besonders hohe Tonerladung angestrebt wird, kann eine Polymerbeschichtung vorteilhaft sein. Als Beschichtungsmittel eignen sich beispielsweise Polymerisate auf Basis von Styrol, $C_1$-$C_4$-Alkylacrylat, $C_1$-$C_4$-Alkylmethacrylat. Besonders vorteilhaft ist die Beschichtung mit Cyanacrylaten der folgenden allgemeinen Formel (I):

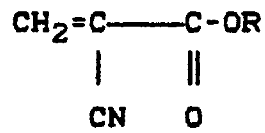

in der
R Alkyl, insbesondere mit 1 bis 10 C-Atomen, Cycloalkyl, insbesondere Cyclohexyl, Alkenyl, insbesondere Allyl, Aryl, insbesondere Phenyl und Aralkyl, insbesondere Benzyl bedeutet.

Die zur Beschichtung eingesetzte Polycyanacrylatmenge beträgt vorzugsweise 10-300 Gew.-%, insbesondere 100-200 Gew.-%, bezogen auf die Pigmentmenge.

Zur Regulierung der elektrischen Ladung der Tonerteilchen können die an sich bekannten oben erwähnten Steuerstoffe verwendet werden. Besonders geeignete, positiv arbeitende Steuerstoffe werden in der GB-PS 1 151 141 beschrieben. Diese Steuerstoffe sind zwei- oder dreiwertige Metallsalze einer von Phosphor abgeleiteten, einen organischen Rest enthaltenden Oxysäure, im einzelnen Salze der Metalle Zink, Kupfer, Cadmium, Aluminium oder Eisen von

a) einem Mono- oder Diester einer von Phosphor abgeleiteten Oxysäure,

b) einer von Phosphor abgeleiteten Oxysäure, welche eine oder zwei durch ein Kohlenstoffatom an den Phosphor gebundene organische Gruppe enthält, oder

c) einer von Phosphor abgeleiteten Oxysäure, die eine Estergruppe und eine über ein Kohlenstoffatom an den Phosphor gebundene organische Gruppe enthält, wobei diese organische Gruppe aliphatisch, cycloaliphatisch oder aromatisch ist.

Die organische Gruppe enthält vorzugsweise eine Kette von mindestens 4 Kohlenstoffatomen, insbesondere von 10 bis 18 Kohlenstoffatomen, und sie kann auch durch ein oder mehrere Heteroatome substituiert und/oder unterbrochen sein, z.B. durch Sauerstoff, Schwefel oder Stickstoff.

Besonders gute Ergebnisse werden mit den Zinksalzen erzielt. Es können jedoch auch andere Salze verwendet werden, z.B. Magnesium-, Calcium-, Strontium-, Barium-, Eisen-, Kobalt-, Nickel-, Kupfer-, Cadmium-, Aluminium- und Bleisalze.

In einer bevorzugten Ausführungsform enthält der erfindungsgemäße Suspensionsentwickler eine Brönstedsäure, die mindestens einen Kohlenwasserstoffrest mit 6 bis 24 Kohlenstoffatomen besitzt, vorzugsweise in einer solchen Menge, daß die basischen stickstoffhaltigen Vinylaromateneinheiten des Blockcopolymerisates ganz oder teilweise in neutralisierter Form vorliegen. Die zugesetzte Brönstedsäure erzeugt oder verstärkt eine positive Aufladung der Tonerteilchen.

Als Brönstedsäuren sind vor allem geeignet: Schwefelsäuremonoester und Phosphorsäure-mono- und -diester, Sulfonsäure, Phosphonsäure sowie CH-azide Verbindungen mit der Maßgabe, daß die Brönstedsäure mindestens einen Kohlenwasserstoffrest mit 6 bis 24 Kohlenwasserstoffatomen aufweist. Bevorzugt werden dabei Brönstedsäuren mit verzweigten Kohlenwasserstoffresten. Besonders geeignet sind Brönstedsäuren, die den Formeln II, III, IV, V und VI entsprechen:

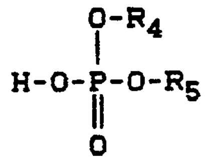

(II)

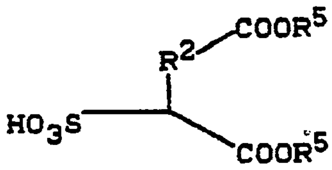

(III)

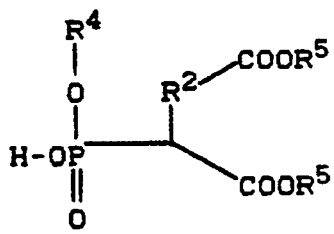

(IV)

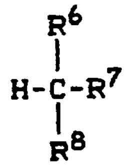

(V)

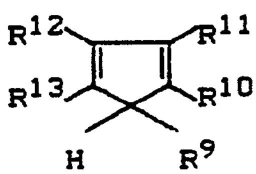

(VI)

worin
$R^2$ ein 2-wertiger Kohlenwasserstoffrest mit 1-18 C-Atomen ist,
$R^4$ ein Kohlenwasserstoffrest mit 1 bis 18 Kohlenstoffatomen ist,
$R^5$ ein Kohlenwasserstoffrest mit 6 bis 24 Kohlenstoffatomen ist,
$R^6$ $-COOR^5$ oder $SO_2R^5$ ist,
$R^7$ und $R^8$ gleich oder verschieden sind und eine der Gruppen -CN, $-NO_2$, -Halogen, $-COOR^5$ oder $-SO_2R^5$ sind,
$R^9$ bis $R^{13}$ gleich oder verschieden sind und $-COOR^{14}$ bedeuten und
$R^{14}$ ein Kohlenwasserstoffrest, insbesondere ein Alkylrest mit 1 bis 24 C-Atomen ist,
mit der Maßgabe, daß in wenigstens einem der Reste $R^9$ bis $R^{13}$ der Substituent $R^{14}$ einen Kohlenwasserstoffrest, insbesondere einen Alkylrest, mit 6 bis 24 C-Atomen bedeutet.

Beispiele für geeignete Brönstedsäuren gemäß obigen Formeln sind:

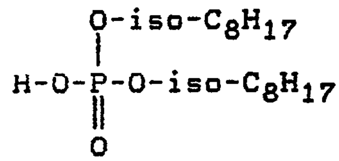

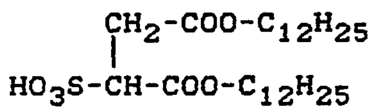

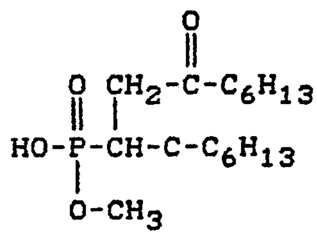

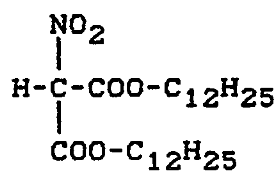

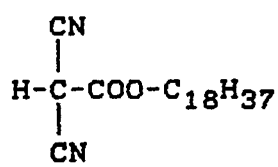

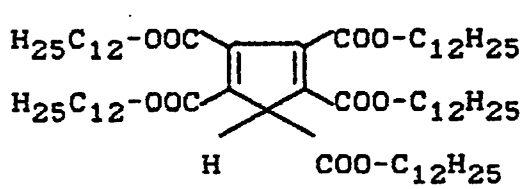

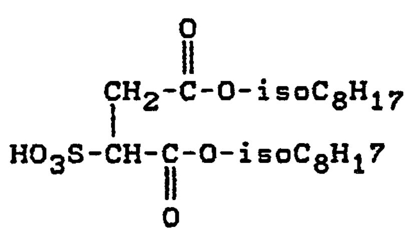

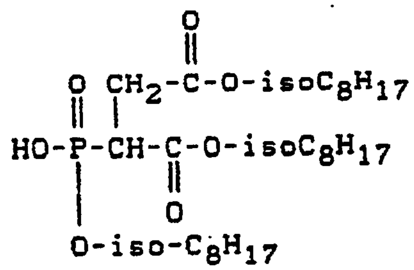

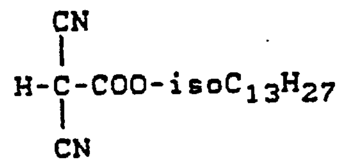

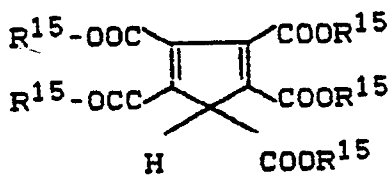

$R^{15}$ = iso $C_{13}H_{27}$

(besonders bevorzugt)

Die Brönstedsäuren werden im allgemeinen in Mengen von 0,01 bis 10 Gew.-%, vorzugsweise 0,1 bis 5 Gew,-%, bezogen auf den Feststoffgehalt des erfindungsgemäßen Suspensionsentwicklers eingesetzt. Die Einsatzmenge wird dabei so bemessen, daß die im Blockcopolymerisat enthaltenen basischen, stickstoffhaltigen Vinylaromateneinheiten ganz oder teilweise, vorzugsweise jedoch nur teilweise neutralisiert werden. Über die Art und die Menge der Brönstedsäure läßt sich in einfacher Weise das Ausmaß der positiven Tonerladung einstellen.

Obwohl der erfindungsgemäße Suspensionsentwickler bereits über eine ausreichende Haftfähigkeit verfügt, können für besondere Anwendungen der Suspensionsentwickler, z.B. zur Entwicklung von Ladungsbildnern auf elektrophotographischen Bindemittelschichten, dem Entwickler sogenannte Fixiermittel einverleibt werden. Als fixierende Substanzen eignen sich Harze, die mit dem Bindemittel des photoleitfähigen Aufzeichnungsmaterials verträglich sein sollen, z.B. mit dem Bindemittel einer photoleitfähigen Zinkoxidschicht, damit nach der Entwicklung eine gute Haftung des erzeugten Bildes auf der Unterlage erhalten wird. Beispiele für geeignete Harze sind Ester von hydrogeniertem Kolophonium und fettem Öllack ("long-oil"), kolophoniummodifiziertes Phenol-Formaldehydharz, Pentaerythritolester von Kolophonium, Glycerinester von hydrogeniertem Kolophonium, Ethylcellulose, verschiedene Alkydharze, Polyacryl- und Polymethacrylharz, Polystyrol, Polyketonharz und Polyvinylacetat. Spezifische Beispiele solcher Harze sind in der Literatur über elektrostatographische Suspensionsentwickler zu finden; z.B. in der DE-PS 699 157 und in der GB-PS 1 151 141.

Die erfindungsgemäßen Suspensionsentwickler können mit Hilfe üblicher Dispergiermethoden hergestellt werden.

Gute Ergebnisse werden unter Verwendung von Kugelmühlen, Perlmühlen, Kolloidmühlen sowie Hochgeschwindigkeitsrührern erzielt. Es ist zweckmäßig, zunächst ein Tonerkonzentrat aus Trägerflüssigkeit, Pigment und Polymer mit einem Gehalt von 5 bis 50 Gew.-%, vorzugsweise 10 bis 25 Gew.-% Feststoff herzustellen, das durch Zugabe von weiterer Trägerflüssigkeit auf die Gebrauchskonzentrationen von 0,05 bis 2%, vorzugsweise 0,1 bis 1% verdünnt wird.

Das erfindungsgemäß verwendete Blockcopolymerisat kann durch eine Vorbehandlung, z.B. durch Aufschmelzen, oder durch Ausfällen aus Lösungen auf das Pigment aufgebracht werden. Es ist jedoch auch möglich, das Blockcopolymerisat der Trägerflüssigkeit zuzusetzen, aus der es durch Adsorption auf das Pigment aufzieht.

Mit den folgenden Beispielen wird die Synthese von mit Alkylmercaptanen modifizierten Blockcopolymerisaten, sowie die Herstellung von erfindungsgemäßen Suspensionsentwicklern im einzelnen erläutert.

Beispiel 1

Synthese der Blockcopolymerisate A, B und C:

Allgemeine Herstllungsweise:

In einem 2-Liter-Glasautoklaven werden unter Ausschluß von Wasser und Sauerstoff 750 ml Cyclohexan, 5 ml Glykoldimethylether und 75 g Butadien-1,3 vorgelegt. Die Mischung wird auf 10°C gekühlt. Dann gibt man 4 ml einer 1 molaren n-Butyllithiumlösung in n-Hexan zu. Durch Auskühlung wird die Polymerisationstemperature bei 40°C gehalten. Nach 90 Minuten wird auf 20°C gekühlt. Danach werden innerhalb von 5 Minuten die in Tab. 1 angegebenen Mengen am 2-Vinylpyridin und Styrol zudosiert. Dabei steigt die Temperatur der Reaktionsmischung auf 30 - 40°C an und wird durch Kühlung bei maximal 40°C gehalten. Nach 60 Minuten gibt man 40 g n-Dodecylmerkaptan und 0,5 g Azodiisobuttersäurenitril, gelöst in 15 ml Toluol, zu und erwärmt 5 Stunden auf 80°C. Die Reaktionsmischung wird am Rotationsverdampfer eingeengt. Das zurückbleibende Blockcopolymerisat wird in 200 ml Cyclohexan gelöst und durch Zusatz von 2000 ml Methanol gefällt. Das Polymerisat wird im Vakuum bei 50°C bis zur Gewichtskonstanz getrocknet. Die Ausbeute beträgt 90 - 98 % der Theorie.

Tab. 1

| Copolymerisat | Styrol,g | 2-Vinylpyridin,g | [η] 1) | S.% | N.% |
|---|---|---|---|---|---|
| A | 30 | 10 | 0.61 | 3.7 | 0.9 |
| B | 20 | 20 | 0,46 | 3,8 | 1,8 |
| C | 0 | 30 | 0,25 | 4,3 | 3,0 |

1) Staudinger Index: dl/g in Toluol bei 25°C

Beispiel 2

Pigmentdispersionen

In einer Stahlkugelmühle werden 20 Teile Rußpigment, 2 bis 5 Teile (10-25 Gew.-%, bezogen auf das Pigment) des Blockcopolymerisats aus Beispiel 1 und 80 Teile Isododecan 15 Stunden lang gemischt. Die Teilchengrößen wurden mittels Laser-Streulicht-Spektroskopie gemessen. Das verwendete Rußpigment hat folgende charakteristische Daten:

| | |
|---|---|
| Ursprung | Ofenruß |
| Dichte | 1,8 g.cm$^{-3}$ |
| Korngröße vor Einsatz des Entwicklers | 51 nm |
| Ölzahl (Menge Leinöl, ausgedrückt in g, die durch 100 g Pigment dasorbiert wird) | 250 |
| Spezifische Oberfläche | 31 m$^2$/g |
| Flüchtiges Material in Gew.-% | 2 |
| pH-Wert | 8 |
| Farbe | blauschwarz |

| Probe | Blockcopolymerisat Gew.-% bezogen auf Pigment | Teilchendurchmesser in nm | K |
|---|---|---|---|
| 1 | 10 % Blockcopol. A | 1385 | 0,73 |
| 2 | 25 % Blockcopol. A | 449 | 0,20 |
| 3 | 10 % Blockcopol. B | 1040 | 0,91 |
| 4 | 25 % Blockcopol. B | 393 | 0,12 |
| 5 | 10 % Blockcopol. C | 913 | 0,44 |
| 6 | 25 % Blockcopol. C | 354 | 0,14 |

K aus der Tabelle ist gleich der zweite Kumulant geteilt durch das Quadrat des ersten Kumulanten aus der Kumulantenanalyse der Autokorrelationsfunktion des gestreuten Laserlichtes (Koppel, D.E., J. Chem. Phys. 57, 11 (1972) 4814-4820) und ist ein Maß für die Verteilungsbreite der Teilchengrößenverteilung. Je kleiner K ist, um so weniger polydispers ist die Dispersion. Die K-Werte der Proben 2, 4 und 6 entsprechen Werten wie sie für nahezu monodisperse Latex-Dispersionen gefunden werden.

Aus der Tabelle ist ersichtlich, daß im Falle von 25 Gew.-% des verwendeten Blockcopolymerisates, bezogen auf die Pigmentmenge, die für ein zufriedenstellendes Auflösungsvermögen des Entwicklers erforderliche kleine Teilchengröße erreicht ist.

Beispiel 3

Erfindungsgemäße Suspensionsentwickler

Den Proben 2, 4 und 6 aus dem Beispiel 2 werden 0,5 bis 1 Gew.-% Zink-mono(2-butyl)-octylphosphat (ZOP), bezogen auf das Pigment, als ladungsbestimmende Substanz zugesetzt. Nach Verdünnen der Dispersionen auf 1 Gew.-% Pigment mit Isododecan werden mit Hilfe der Methode von Kohler (Photographic Science and Engineering 22, 4 (1978) 218-227) die relevante Daten für die elektrophoretische Entwicklung bestimmt:

| Proben Nr. aus Beisp.2 | ZOP (Gew.-%) | $X_E$ ($Ohm^{-1}m^{-1}$) | $X_M$ ($Ohm^{-1}m^{-1}$) | µ ($m^2V^{-1}S^{-1}$) |
|---|---|---|---|---|
| 2 | - | $0,5 \times 10^{-10}$ | - | - |
| 2 | 0,5 | $3,5 \times 10^{-9}$ | $1,5 \times 10^{-9}$ | $4,4 \times 10^{-10}$ |
| 4 | - | $0,4 \times 10^{-10}$ | - | - |
| 4 | 0,5 | $2,4 \times 10^{-9}$ | $1,1 \times 10^{-9}$ | $8,0 \times 10^{-8}$ |

$X_E$ ist die Leitfähigkeit des gesamten Entwicklers, $X_M$ ist die Leitfähigkeit der flüssigen Phase des Entwicklers nach Abtrennung der Pigmentteilchen durch Zentrifugieren. μ ist die elektrophoretische Beweglichkeit der Pigmentteilchen. Ohne Zugabe der ladungsbestimmenden Substanz zu dem Entwickler sind die Werte für μ und q/m so klein, daß sie nicht ermittelt werden können. Nach Zugabe des ZOP's sind die Teilchen eindeutig positiv aufgeladen und lassen sich einwandfrei auf einer negativ aufgeladenen Polyesterfolie abscheiden.

Beispiel 4

Erfindungsgemäßer Suspensionsentwickler

20 g Helioechtblau HG (C.I. Nr. 74 160), 5 g Blockcopolymerisat C aus Beispiel 1 und 170 g Isododecan werden 15 Stunden lang mit Hilfe einer Stahlkugelmühle gemischt. Die erhaltene Dispersion wird mit 1 % Pentaisotridecyloxycarbonylcyclopentadien (bezogen auf Feststoff) als Brönstedsäure versetzt, auf 1 % verdünnt und als Toner geprüft:

| $X_e$ $(Ohm^{-1}m^{-1})$ | $X_M$ $(Ohm^{-1}m^{-1})$ | μ $(m^2V^{-1}s^{-1})$ | q/m* $(As\ kg^{-1})$ |
|---|---|---|---|
| $3{,}2 \cdot 10^{-9}$ | $0{,}19 \cdot 10^{-9}$ | $3{,}3 \cdot 10^{-9}$ | $7 \cdot 10^{-2}$ |

* q/m ist die Ladung pro Gewichtseinheit der Tonerteilchen

Die im Vergleich zur Leitfähigkeit des gesamten Entwicklers sehr niedrige Leitfähigkeit der flüssigen Phase ist anwendungstechnisch von besonderem Vorteil.

Beispiel 5

Vergleichsbeispiel

Herstellung einer Pigmentdispersion mit nicht mit Alkylmercaptan modifiziertem Styrol-Butadien-Blockpolymeren des aus der GB-PS 1 186 562 bekannten Typs.

1 g Blockpolymeres aus gleichen Gewichtsteilen Styrol und Butadien mit einer Molmasse von $1{,}6 \cdot 10^4$, wird mit 4 g Rußpigment und 50 ml Isododecan 15 Stunden lang in einer Kugelmühle gemahlen. Man erhält eine grobteilige Dispersion (Teilchengröße >1 μm).

1 g Blockpolymeres aus 38 Gew.-Teilen Styrol und 62 Gew.-Teilen Butadien mit einer Molmasse von $1{,}3 \cdot 10^4$ wird in 50 ml Isododecan gelöst. Diese Lösung wird zusammen mit 4 g Rußpigment 15 Stunden lang gemahlen. Es wird eine Pigmentdispersion erhalten, wobei der mittlere Korndurchmesser der dispergierten Teilchen 910 nm beträgt.

Die nach Zusatz von 1 Gew.-% ZOP, bezogen auf die Pigmentmenge, erhaltenen Suspensionsentwickler zeigen eine starke Sedimentationstendenz und liefern zugleich mäßig getönte Bilder mit unzureichender Auflösung.

**Patentansprüche**

1. Elektrostatographischer Suspensionsentwickler, der in einer elektrisch isolierenden Trägerflüssigkeit mit einem Volumenwiderstand von mindestens $10^9$ Ohm.cm und einer Dielektrizitätskonstanten unter 3 ein dispergiertes Pigment und ein Blockcopolymerisat enthält, dadurch gekennzeichnet, daß das Blockcopolymerisat enthält:
a) einem Block aus 5-100 Gew.-Teilen polymerisierten, basischen, stickstoffhaltigen Vinylaromaten und 0-95 Gew.-Teilen polymerisierten, stickstoffreien Vinylaromaten und
b) einen Block aus polymerisierten $C_4$-$C_6$-Dienen mit 25-95 % seitenständigen Doppelbindungen, die ganz oder teilweise mit Alkylmercaptanen umgesetzt sind.

2. Suspensionsentwickler nach Anspruch 1, dadurch gekennzeichnet, daß das Blockcopolymerisat enthält
a) einen Block aus 5-100 Gew.-Teilen polymerisiertem Vinylpyridin und 0-95 Gew.-Teilen polymerisiertem Styrol und
b) einen Polybutadienblock, dessen Vinyldoppelbindungen ganz oder teilweise mit Alkylmercaptanen umgesetzt sind.

3. Suspensionsentwickler nach den Ansprüchen 1 oder 2, dadurch gekennzeichnet, daß der Suspensionsentwickler zusätzlich eine Brönstedsäure, die mindestens einen Kohlenwasserstoffrest mit 6 bis 24 Kohlenstoffatomen besitzt, enthält.

4. Suspensionsentwickler nach Anspruch 3, dadurch gekennzeichnet, daß die Brönstedsäuren der allgemeinen Formeln

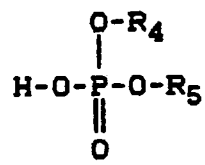

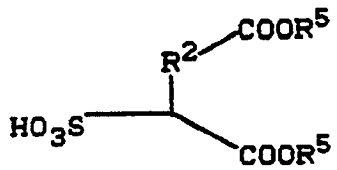

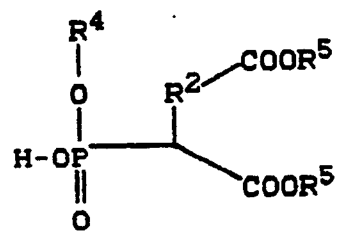

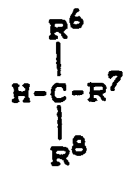

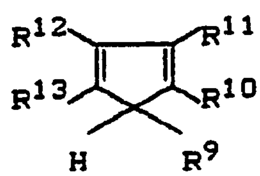

entsprechen, worin
$R^2$ ein 2-wertiger Kohlenwasserstoffrest mit 1 bis 18 C-Atomen
$R^4$ ein Kohlenwasserstoffrest mit 1 bis 18 Kohlenstoffatomen ist,
$R^5$ ein Kohlenwasserstoffrest mit 6 bis 24 Kohlenstoffatomen ist,
$R^6$ -$COOR^5$ oder $SO_2R^5$ ist,
$R^7$ und $R^8$gleich oder verschieden sind und eine der Gruppen -CN, -$NO_2$, -Halogen, -$COOR^5$ oder -$SO_2R^5$ sind,
$R^9$ bis $R^{13}$ gleich oder verschieden sind und -$COOR^{14}$ bedeuten und
$R^{14}$ ein Kohlenwasserstoffrest mit 1 bis 24 C-Atomen ist,
mit der Maßgabe, daß in wenigstens einem der Reste $R^9$ bis $R^{13}$ der Substituent $R^{14}$ einen Kohlenwasserstoffrest mit 6 bis 24 C-Atomen bedeutet.

5. Suspensionsentwickler nach Anspruch 4, dadurch gekennzeichnet, daß die Brönstedsäure der Formel

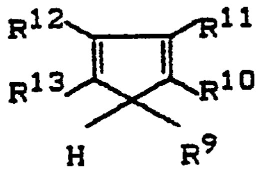

entspricht, worin $R^9$ bis $R^{13}$ die oben angegebene Bedeutung haben.

6. Suspensionsentwickler nach den Ansprüchen 1 bis 5, dadurch gekennzeichnet, daß das dispergierte Pigment mit Polycyanacrylat beschichtet ist.

7. Suspensionsentwickler nach Anspruch 1, dadurch gekennzeichnet, daß er zusätzlich einen die elektrische Ladung der Tonerteilchen regulierenden Steuerstoff enthält.

8. Suspensionsentwickler nach Anspruch 7, dadurch gekennzeichnet, daß der Steuerstoff ein zwei- oder dreiwertiges Metallsalz einer von Phosphor abgeleiteten, einen organischen Rest enthaltenden Oxysäure ist.

## Claims

1. An electrographic suspension developer which contains a dispersed pigment and a block copolymer in an electrically insulating carrier liquid having a volume resistance of at least $10^9$ ohm.cm and a dielectric constant below 3, characterized in that the block copolymer contains:

a) a block of 5 to 100 parts by weight polymerized, basic, nitrogen-containing aromatic vinyl compounds and 0 to 95 parts by weight polymerized, nitrogen-free aromatic vinyl compounds and

b) a block of polymerized $C_{4-6}$ dienes containing 25 - 95% lateral double bonds completely or partly reacted with alkyl mercaptans.

2. A suspension developer as claimed in claim 1, characterized in that the block copolymer contains

a) a block of 5 to 100 parts by weight polymerized vinyl pyridine and 0 to 95 parts by weight polymerized styrene and

b) a polybutadiene block of which the vinyl double bonds are completely or partly reacted with alkyl mercaptans.

3. A suspension developer as claimed in claim 1 or 2, characterized in that the suspension developer additionally contains a Brönsted acid containing at least one $C_{6-24}$ hydrocarbon radical.

4. A suspension developer as claimed in claim 3, characterized in that the Brönsted acids correspond to the following general formulae

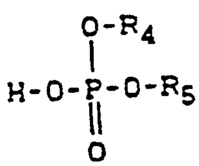

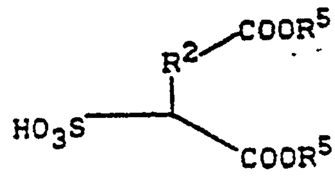

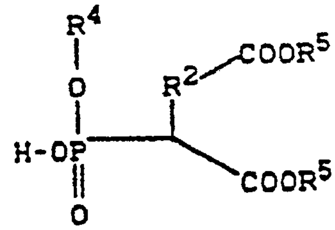

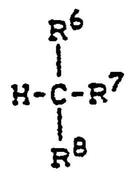

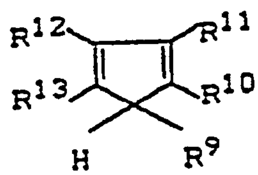

in which
$R^2$ is a difunctional $C_{1-18}$ hydrocarbon radical,
$R^4$ is a $C_{1-18}$ hydrocarbon radical,
$R^5$ is a $C_{6-24}$ hydrocarbon radical,
$R^6$ is $-COOR^5$ or $SO_2R^5$,
$R^7$ and $R^8$ may be the same or different and represent one of the groups -CN, $-NO_2$, -halogen, $-COOR^5$ or $-SO_2R^5$,
$R^9$ to $R^{13}$ may be the same or different and represent $-COOR^{14}$ and
$R^{14}$ is a $C_{1-24}$ hydrocarbon radical,
with the proviso that, in at least one of the groups $R^9$ to $R^{13}$, the substituent $R^{14}$ is a $C_{6-24}$ hydrocarbon radical.

5. A suspension developer as claimed in claim 4, characterized in that the Brönsted acid corresponds to the following formula

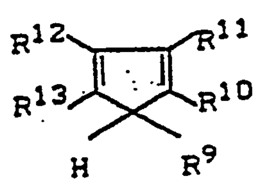

in which $R^9$ to $R^{13}$ are as defined above.

6. A suspension developer as claimed in claims 1 to 5, characterized in that the dispersed pigment is coated with polycyanoacrylate.

7. A suspension developer as claimed in claim 1, characterized in that it additionally contains a controller which regulates the electrical charge of the toner particles.

8. A suspension developer as claimed in claim 7, characterized in that the controller is a divalent or trivalent metal salt of a phosphorus-based oxyacid containing an organic radical.

## Revendications

1. Révélateur électrostatographique en suspension contenant dans un liquide de support d'une résistivité d'au moins $10^9$ Ohm.cm et d'une constante diélectrique inférieure à 3, un pigment dispersé et un copolymère séquencé, caractérisé en ce que le copolymère séquencé contient:

a) un bloc de 5 à 100 parties en poids de composés vinyl-aromatiques azotés basiques polymérisés et 0 à 95% en poids de composés vinyl-aromatiques polymérisés exempts d'azote et

b) un bloc de diènes en $C_4$-$C_6$ polymérisés comportant 25 à 95% de liaisons doubles en position latérale qui ont réagi entièrement ou en partie avec des alkylmercaptans.

2. Révélateur en suspension selon la revendication 1, caractérisé en ce que le copolymère séquencé contient:

a) un bloc de 5 à 100 parties en poids de vinylpyridine polymérisée et 0 à 95% en poids de styrène polymérisé et

b) un bloc de polybutadiène dont les liaisons doubles vinyliques ont réagi entièrement ou en partie avec des alkylmercaptans.

3. Révélateur en suspension selon les revendications 1 ou 2, caractérisé en ce qu'il contient de plus un acide de Brönsted possédant au moins un reste hydrocarboné avec 6 à 24 atomes de carbone.

4. Révélateur en suspension selon la revendication 3, caractérisé en ce que les acides de Brönsted répondent aux formules générales

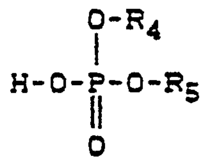

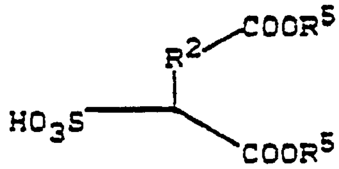

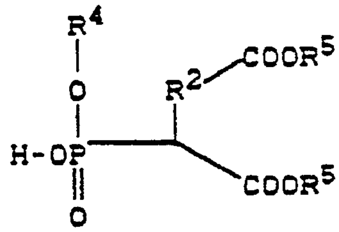

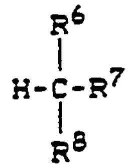

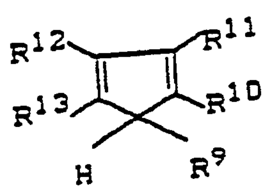

dans lesquelles
$R^2$ représente un reste hydrocarboné bivalent avec 1 à 18 atomes de carbone,
$R^4$ représente un reste hydrocarboné avec 1 à 18 atomes de carbone,
$R^5$ représente un reste hydrocarboné avec 6 à 24 atomes de carbone,
$R^6$ représente $-COOR^5$ ou $SO_2R^5$,
$R^7$ et $R^8$ sont identiques ou différents et représentent un des groupes -CN, $-NO_2$, halogène, $-COOR^5$ ou $-SO_2R^5$,
$R^9$ à $R^{13}$ sont identiques ou différents et représentent $-COOR^{14}$ et
$R^{14}$ représente un reste hydrocarboné, en particulier un reste alkyle avec 1 à 24 atomes de carbone,
avec la condition que dans au moins l'un des restes $R^9$ à $R^{13}$ le substituant $R^{14}$ soit un reste hydrocarboné, en particulier un reste alkyle, avec 6 à 24 atomes de carbone.

5. Révélateur en suspension selon la revendication 4, caractérisé en ce que l'acide de Brönsted répond à la formule

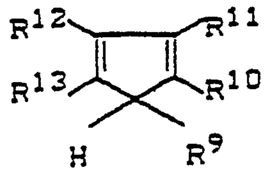

dans laquelle $R^9$ à $R^{13}$ ont les significations décrites ci-dessus.

6. Révélateur en suspension selon les revendications 1 à 5, caractérisé en ce que le pigment dispersé est revêtu de polycyanacrylate.

7. Révélateur en suspension selon la revendication 1, caractérisé en ce qu'il contient de plus une substance de commande réglant la charge électrique des particules de toner.

8. Révélateur en suspension selon la revendication 7, caractérisé en ce que la substance de commande est un sel métallique bi- ou trivalent d'un oxacide dérivé du phosphore contenant un reste organique.